# EUROPÄISCHE PATENTSCHRIFT

(11) **EP 2 873 324 B1**
(45) Veröffentlichungstag und Bekanntmachung des Hinweises auf die Patenterteilung: **26.07.2017**
(21) Anmeldenummer: 14190850.9
(22) Anmeldetag: 29.10.2014
(51) Int. Cl.: A22C 11/02

(54) **Vorrichtung zum Füllen schlauchförmiger Hüllen**
Device for filling tubular casings
Dispositif de remplissage d'enveloppes en forme de tuyau

(30) Priorität: 13.11.2013 DE 202013010285 U
(43) Veröffentlichungstag der Anmeldung: 20.05.2015
(73) Patentinhaber: VEMAG Maschinenbau GmbH, 27283 Verden/Aller (DE)
(72) Erfinder: Krompholz, Harry, 27313 Dörverden-Stedorf (DE); Hagedorn, Jan-Nils, 27283 Verden (DE); Lewin, Alexander, 27283 Verden (DE)
(74) Vertreter: Eisenführ Speiser

(56) Entgegenhaltungen:
- EP-A1- 0 539 850
- EP-A1- 1 260 143
- EP-A1- 2 266 409
- JP-A- 2004 000 152

## Beschreibung

Die vorliegende Erfindung betrifft eine Vorrichtung zum Füllen von schlauchförmigen Hüllen, mit einer pastösen Masse, insbesondere von Darmraupen mit Wurstbrät, mit zumindest einem um seine Längsachse dreh- und antreibbaren Füllrohr, auf das eine mit einer Masse befüllbare Hülle aufziehbar ist, wobei das Füllrohr an einem Ende drehbeweglich an einem Aufnahmeteil gelagert und dem gegenüberliegenden, offenen Ende eine mit einer über das Füllrohr gezogenen Hülle in Wirkverbindung bringbare Darmbremseinheit zugeordnet ist.

Die Erfindung betrifft desweiteren eine Füllmaschine zum Herstellen von Würstchen aus pastöser Masse, insbesondere aus Wurstbrät.

Vorrichtungen zum Füllen von schlauchförmigen Hüllen werden insbesondere an Füllmaschinen zum Herstellen von Wurststrängen eingesetzt, mittels denen eine pastöse Masse, wie Wurstbrät oder dergleichen, portionsweise bzw. in Form von Portionen vorbestimmter Menge in schlauchförmige Hüllen aus Kunststoff oder Naturdarm eingefüllt wird. Während des Füllvorganges wird zwischen den einzelnen Befüllschritten die befüllte Hülle, in vorbestimmten Abständen abgeteilt oder abgedreht, wodurch voneinander separierbare Strangabschnitte möglichst gleicher Länge und gleichen Gewichts erzeugt werden, die anschließend voneinander getrennt werden können. Durch das Trennen der voneinander separierten Abschnitte werden dann die einzelnen Würste gebildet, die unter anderem für eine Weiterverarbeitung einer Verpackungsmaschine zugeführt werden können.

Vor dem Befüllen der schlauchförmigen Hülle wird diese auf das Füllrohr einer Füllvorrichtung aufgezogen, wobei die schlauchförmige Hülle, deren eigentliche Länge ein Vielfaches der Länge des Füllrohrs entspricht, bereits üblicherweise gerafft ist, so dass die geraffte Hülle, auch bezeichnet als Darmraupe, kürzer ist als das Füllrohr. Die gerafften Hüllen können unterschiedliche Durchmesser, auch Kaliber genannt, aufweisen. Mittels einer der Füllvorrichtung vorzugsweise vorgeschalteten Fördereinrichtung, wie zum Beispiel einer Pumpe, insbesondere einer Flügelzellenpumpe oder einer Förderschnecke, wird die pastöse Masse durch das Füllrohr in die einseitig geschlossene schlauchförmige Hülle gepresst. Aufgrund der in die Hülle eingeleiteten Masse wird die Hülle allmählich von dem offenen Ende des Füllrohres abgezogen. Ist eine voreinstellbare Menge beziehungsweise Portion der Masse in die Hülle eingefüllt, wird der Füllvorgang kurz unterbrochen und, um die eingegebene Portion von der nachfolgenden Portion abzutrennen, der auf dem Füllrohr befindliche Hüllenabschnitt mithilfe des um seine Längsachse drehbar gelagerten Füllrohres gedreht. Das Füllrohr ist zu diesem Zweck mit einem am Aufnahmeteil für das Füllrohr angeordneten Antrieb verbunden. Das Füllrohr wird mitsamt des auf dem Füllrohr aufgezogenen, gerafften Hüllenabschnittes um seine Längsachse verdreht und somit nach einer in die schlauchförmige Hülle abgegebenen Menge an Wurstbrät eine Einschnür- oder Abdrehstelle erzeugt. Nach erfolgtem Abdrehvorgang, wobei das Füllrohr um eine voreinstellbares Winkelmaß verdreht wird, wird wiederum eine vorbestimmte Menge der einzufüllenden Masse durch das Füllrohr in die schlauchförmige Hülle gepresst und damit diese wieder ein stückweit vom Füllrohr abgezogen. Nach dem erfolgten Eingeben der Masse wird der Abdrehvorgang erneut gestartet und mit kontinuierlicher Abfolge der vorbeschriebenen Prozessschritte ein Strang mit einzelnen, voneinander separierbaren Strangabschnitten hergestellt.

Um ein sicheres Mitdrehen des Darms auf dem Füllrohr zu gewährleisten sind Darmmitnahmeeinrichtungen beziehungsweise Darmbremseinheiten insbesondere am offenen Ende des Füllrohrs vorgesehen, welche die Hülle auf das Füllrohr drücken. Die Darmbremseinheit weist diesbezüglich einen drehbargelagerten Bremsring auf, der einen Reib- oder Formschluss zwischen der äußeren Mantelfläche des Füllrohres und einem Abschnitt der darauf aufgezogenen Darmraupe sicherstellen soll und damit die vom Füllrohr erzeugte Drehbewegung auf den darüber gezogenen Hüllenabschnitt überträgt. In vorgegebenen Zeitabständen ist die auf das Füllrohr aufgezogene schlauchförmige Hülle aufgebraucht und es muss eine neue, geraffte schlauchförmige Hülle auf das Füllrohr aufgezogen werden. Zu diesem Zweck ist die Darmbremseinheit vom offenen Ende des Füllrohres zu entfernen, in dem die Darmbremseinheit in Längsrichtung des Füllrohres vom selbigen abgezogen wird. Eine neue, geraffte schlauchförmige Hülle wird mit Hilfe zum Beispiel einer Darmgreifvorrichtung vom offenen Ende des Füllrohres aus auf das Füllrohr aufgeschoben oder aufgezogen und anschließend die Darmmitnahmeeinrichtung bzw. Darmbremseinheit mit dem vorderen offenen Ende des Füllrohres wieder in Kontakt gebracht, wodurch die schlauchförmige Hülle zumindest in Bereich der Füllrohrspitze auf das Füllrohr gedrückt wird.

Aus der EP 2 040 556 B1 ist eine Füllvorrichtung vorbezeichneter Gattung bekannt, auf dessen Füllrohr in regelmäßigen Zeitabständen schlauchförmige Hüllen aufgezogen beziehungsweise aufgeschoben werden. Um die Zeitabstände zwischen den Wechseln zu verringern und damit die Wirtschaftlichkeit des Füllvorganges zu verbessern, werden Füllrohre eingesetzt, die große Längenabmessungen (Mindestlängen) aufweisen, um entsprechend lange schlauchförmige Hüllenabschnitte aufnehmen zu können. Dadurch lässt sich eine vorbestimmte Mindestanzahl von zueinander separierten Strangabschnitten ohne Hüllenwechsel erzeugen. Mitunter können beim Aufziehen der schlauchförmigen Hüllen aus zum Beispiel Kollagen oder Kunststoff oder beim Einsatz von Naturdärmen, oder beim erneuten in Kontakt bringen der Darmbremseinheit mit der Hülle am offenen Ende des Füllrohres die relativ langen Füllrohre verbogen werden. Als Folge dessen kann es während der Abdrehvorgänge des anschließenden Füllvorgangs zum Schwingen der verbogenen Füllrohre kommen und damit zu einer Fehlbeladung der schlauchförmigen Hülle führen. Gegebenenfalls werden die Füllrohre beim Hüllenwechsel derart verbogen, dass diese beim weiteren Betrieb der Füllvorrichtung nicht mehr verwendet werden können und ausgetauscht werden müssen. Aus der EP 1 260 143 A1 ist eine Darmhaiteeinrichtung für eine Abfüllmaschine von pastösen Produkten bekannt, wobei die Abfüllmaschine ein drehbares Füllrohr aufweist. Die Darmhaiteeinrichtung umfasst einen Auslegerarm und einen im rechten Winkel zum Auslegerarm verlaufenden Stützarm, an dessen Ende eine Darmbremshülse angeordnet ist.

Aus der EP 2 266 409 A1 ist eine Vorrichtung zum Füllen von Därmen bekannt, mit einem an einer Tragkonsole drehbar angeordneten Abdrehkopf an dem zwei um ihre Längsachse antreibbare Füllrohre angeordnet sind. Das freie Ende eines Füllrohres ist durch das Verschieben des Abdrehkopfes parallel zu seiner Drehachse mit der Darmbremse der EP 2 266 409 A1 in Wirkverbindung bringbar.

Aus der EP 0 539 850 A1 ist eine Raffvorrichtung mit zwei an einer drehbaren Revolverscheibe angeordneten Raffrohren bekannt, wobei die Revolverscheibe zusammen mit den Raffrohren in axialer Richtung bewegbar ist. Zudem kann die Revolverscheibe um ihre Mittenachse um etwa 180° hin und her verschwenkt werden, sodass die Raffrohre abwechselnd mit einer Raffstation und einer Press- und Abziehstation in Kontakt gebracht werden. An der Revolverscheibe ist eine Abstützeinrichtung mit zwei mit den Raffrohren in Kontakt bringbaren Paaren von Zangen angeordnet, die einen festen Abstand zur Revolverscheibe haben und sich durch Betätigen der Zangenhebel in Kontakt und außer Kontakt mit den Raffrohren bringen lassen.

Vor diesem Hintergrund liegt der vorliegenden Erfindung die Aufgabe zugrunde, eine Vorrichtung zum Füllen schlauchförmiger Hüllen vorbezeichneten Gattung dahingehend zu verbessern, dass eine verbesserte Prozesssicherheit während des Betriebes der Füllvorrichtung gewährleistet ist.

Die Erfindung löst die ihr zugrunde liegende Aufgabe bei einer Vorrichtung zum Füllen schlauchförmiger Hüllen der vorbezeichneten Gattung durch eine am Aufnahmeteil angeordnete Stützeinrichtung, welche ein in Längsrichtung des Füllrohres im Abstand zum Aufnahmeteil angeordnetes Stützelement für das Füllrohr aufweist, wobei das Stützelement zur Aufnahme von auf das Füllrohr wirkenden Querkräften eingerichtet ist und entlang des Füllrohres beweglich ist. Der Erfindung liegt die Erkenntnis zugrunde, mithilfe der Stützeinrichtung und ihrem am Füllrohr angreifenden Stützelement, dass beabstandet, d.h. im Abstand, zum Aufnahmeteil und damit zum drehbeweglich am Aufnahmeteil gelagerten Ende des Füllrohres angeordnet ist, einen zweiten Lagerpunkt für das Füllrohr auszubilden. Über das Stützelement wird das Füllrohr in einem Bereich zwischen seinem drehbar gelagerten Ende und dem offenen Ende, an dem die pastöse Masse austritt, zusätzlich abgestützt, wodurch auf das Füllrohr einwirkende Querkräfte aufgefangen werden können. Somit lässt sich verhindern, dass das Füllrohr, während eine neue schlauchförmige Hülle über das Füllrohr gezogen wird oder das offene Ende des Füllrohres mit der Darmbremseinheit in Kontakt gebracht wird, eine Bewegung quer zu seiner Längs- bzw. Erstreckungsrichtung ausführt. Zudem kann mit dem Stützelement dem Durchhängen eines mittleren Abschnittes des Füllrohres, hervorgerufen durch dessen Eigengewicht, entgegengewirkt und damit Verformungen, hervorgerufen durch Fliehkräfte beim Abdrehvorgang, vermieden werden. Damit ist das Risiko deutlich verringert, dass ein jeweiliges Füllrohr übermäßig verbogen oder gar beschädigt wird, sodass, wenn überhaupt, nur geringfügige bleibende Verformungen am Füllrohr auftreten, die eine weitere Verwendung an der Füllvorrichtung nicht beeinträchtigen. Ein vorzeitiger Austausch des Füllrohres ist damit vorzugsweise vermieden. Die Stützeinrichtung selbst weist dabei eine bevorzugt starre Verbindung zum Aufnahmeteil der Füllvorrichtung auf. Das Stützelement weist bevorzugt eine Drehaufnahme für das Füllrohr auf, wodurch gewährleistet ist, dass das Füllrohr um seine Längsachse drehbar am Stützelement aufgenommen ist. Die Drehaufnahme ist vorzugsweise als Drehlager ausgebildet und nimmt unmittelbar den Außendurchmesser des Füllrohres auf. Das Stützelement ist entlang des Füllrohres beweglich. Damit ist erreicht, dass der Abstand des Stützelements zum Aufnahmeteil veränderlich ist, sodass die Abschnitte des Füllrohrs durch das Stützelement gezielt abgestützt werden können, an denen zeitweise die größten Querkräfte wirken. Das Stützelement ist entlang des Füllrohres zwischen zwei Endpositionen verschiebbar. Die erste Endposition ist nahe dem Aufnahmeteil und damit nahe dem Füllrohrende, das dreh- und antreibbar am Aufnahmeteil angeordnet ist. Die zweite Endposition liegt nahe dem offenen Füllrohrende. Unter der Begrifflichkeit "nahe" ist vorliegend vorzugsweise ein Abstand zu einem jeweiligen Füllrohrende von 1/5 oder weniger bezogen auf die Gesamtlänge des Füllrohres zu verstehen. Das Stützelement ist vorzugsweise so gesteuert, dass es in der zweiten Endposition nahe des offenen Füllrohren des positioniert ist, wenn die geraffte Hülle auf das Füllrohr aufgeschoben wird.

Die beim Aufschieben der gerafften Hülle, insbesondere am offenen Ende möglicherweise wirkenden Querkräfte können somit sicher von dem dort positionierbaren Stützelement aufgenommen werden. Vorzugsweise ist das Stützelement entlang des Füllrohrs bzw. in Längsrichtung des Füllrohrs schiebebeweglich gelagert. Eine bevorzugte Ausgestaltung der Erfindung sieht vor, dass am offenen Ende des Füllrohrs das positionierbare Stützelement beim Aufschieben der gerafften Hülle, auch als Darmraupe bezeichnet, automatisch in Richtung des drehbeweglich gelagerten Ende des Füllrohrs verschoben wird, sodass sich der Abstand zwischen dem Stützelement und dem Aufnahmeteil für das Füllrohr verkleinert.

Vorzugsweise sind am Aufnahmeteil mehrere dreh- und antreibbare Füllrohre angeordnet, wobei jedes Füllrohr über ein im Abstand zum Aufnahmeteil und damit zum drehbeweglich gelagerten Ende des Füllrohres angeordnetes Stützelement gelagert ist. Mit der Verwendung mehrerer Füllrohre ist ein, bezogen auf die Wirtschaftlichkeit, verbesserter Füllvorgang an der erfindungsgemäß ausgebildeten Füllvorrichtung erreicht. In dem Moment, wo an einem Füllrohr eine neue schlauchförmige Hülle aufgezogen beziehungsweise aufgeschoben wird, kann an dem jeweils anderen Füllrohr der Füllvorgang, der darauf aufgezogenen Hülle umgesetzt werden. Bevorzugt weist die Füllvorrichtung am Aufnahmeteil zwei drehbeweglich gelagerte Füllrohre auf. Zur Umsetzung der Drehbewegung der Füllrohre am Aufnahmeteil ist jedem Füllrohr, bevorzugt ein separates Antriebsmittel zugeordnet. Durch den Einsatz eines bevorzugt entlang eines jeweiligen Füllrohres beweglichen Stützelementes an jedem der Füllrohre ist durch den zweiten vorzugsweise als Loslager ausgebildeten Lagerpunkt für die Füllrohre gewährleistet, dass keines der am Aufnahmeteil antreibbar gelagerten Füllrohre beim Aufziehen einer neuen schlauchförmigen Hülle oder beim in Kontakt bringen mit der Darmbremseinheit quer zur Längsrichtung verbogen wird. Zudem werden die mit der Stützeinrichtung stabilisierten Füllrohre beispielsweise positionsgenau zur Darmgreifvorrichtung oder der Darmbremseinheit gehalten, was das Aufschieben beziehungsweise Aufziehen einer neuen schlauchförmigen Hülle und/oder dass in Kontakt bringen des offenen Endes eines jeweiligen Füllrohres mit der Darmbremseinheit vereinfacht. Die Aufnahme über wenigstens zwei Lagerpunkte des Füllrohres hat darüber hinaus den Vorteil, dass die Füllrohre, selbst wenn sie in Erstreckungsrichtung geringfügig gekrümmt sind, während des Abdrehvorganges ein deutlich verringertes Schwingungsverhalten aufweisen.

Gemäß einer bevorzugten Ausführungsform der Erfindung weist das Aufnahmeteil eine Schwenkplatte auf, die beweglich an der Vorrichtung gehalten und an der das Füllrohr vorzugsweise waagerecht abstehend angeordnet ist. Mit der beweglichen Aufnahme der Schwenkplatte an der Vorrichtung, ist es auf einfach Weise möglich, das Füllrohr, an dem eine neuen schlauchförmige Hülle aufzuziehen ist, aus seiner Befüllposition an der erfindungsgemäßen Füllvorrichtung heraus zu bewegen, in der üblicherweise der Füllvorgang der schlauchförmigen Hülle vorgenommen wird. Damit ist eine verbesserte Bewegungsfreiheit für beispielsweise eine zum Aufziehen der schlauchförmigen Hülle auf das jeweilige Füllrohr umsetzende Darmgreifvorrichtung geschaffen. Vorzugsweise weist die Schwenkplatte eine Plattenebene auf, an der das Füllrohr bevorzugt senkrecht absteht. Damit ist eine konstruktiv einfache Lagerung des Füllrohres mit seinem am Aufnahmeteil drehbeweglich gehaltenen Ende geschaffen.

Bevorzugt weist die Schwenkplatte eine Drehachse auf, wobei die Drehachse der Schwenkplatte und jeweils die Drehachse des Füllrohres parallel zueinander ausgerichtet sind. Durch die parailel zur Drehachse des Füllrohres verlaufende Drehachse der Schwenkplatte, ist eine konstruktiv einfach umzusetzende Schwenkbewegung des Füllrohres an der Füllvorrichtung erreicht. Durch eine einfach umsetzbare Drehbewegung an der Schwenkplatte um bevorzugt ihre Rotationsachse kann ein jeweils neu zu bestückendes Füllrohr aus seiner Befüllposition bewegt werden. Die Befüllposition ist die Stellung des Füllrohres an der Füllvorrichtung, in der das Füllrohr während des Befüllvorganges mit der Darmbremseinheit in Kontakt gebracht ist, wobei das Füllrohr in eine Position überführt wird, in der eine ausreichenende Bewegungsfreiheit für die das Füllrohr mit der schlauchförmigen Hülle bestückende Darmgreifvorrichtung vorhanden ist. Die Schwenkplatte weist vorzugsweise eine Kreisform auf, deren Mittelachse gleichzeitig die Drehachse der Schwenkplatte ausbildet. Die bevorzugt zwei oder mehr an der Schwenkplatte angeordneten Füllrohre sind gleichmäßig beabstandet und zu dem symmetrisch zur Drehachse der Schwenkplatte angeordnet, sodass eine gleichmäßige Massenverteilung der Füllrohre an der Schwenkplatte gegeben ist. Während des Schwenkvorganges der Schwenkplatte mit den daran angeordneten, dreh- und antreibbaren Füllrohren ist somit eine gleichmäßige Kräfteverteilung bewirkt. Mit Hilfe der die Füllrohre zusätzlich abstützenden Stützelemente werden die Füllrohre zudem während der Schwenkbewegung der Schwenkplatte in ihrer vorgegebenen Ausrichtung zur Drehachse gehalten, sodass die Schwenkbewegung mit einer hohen Geschwindigkeit durchgeführt werden kann, ohne das Risiko, dass die Füllrohre derart in Schwingungen versetzt werden, dass bleibende Verformungen an den Füllrohren auftreten.

Bevorzugt weist das Stützelement einen Führungsschlitten auf, der entlang einer parallel zur Längsachse des Füllrohres ausgerichteten Führungsbahn der Stützeinrichtung beweglich ist. Mit dem Einsatz eines Führungsschlittens, der entlang einer Führungsbahn der Stützeinrichtung vorzugsweise schiebebeweglich aufgenommen ist, lässt sich das Stützelement vorzugsweise entlang des Füllrohres verschieben, wodurch der Abstand des Stützelementes zum Ende des Füllrohres, welches dreh- und antreibbar am Aufnahmeteil der Vorrichtung gehalten ist, variabel bzw. verstellbar ist. Damit ist die Länge des Aufnahmebereiches am Füllrohr für die auf das Füllrohr aufzuschiebende beziehungsweise aufzuziehende schlauchförmige Hülle veränderbar ausgebildet und ermöglicht eine individuelle Anpassung an zum Beispiel unterschiedlich lange schlauchförmigen Hüllen. Bevorzugt wird die Position des Stützelementes am Füllrohr in Abhängigkeit von der Länge der auf dem Füllrohr aufziehbaren Hülle und/oder der sich während des Füllvorganges verändernden Länge der noch auf dem Füllrohr verbleibenden schlauchförmigen Hülle angepasst.

Eine bevorzugte Ausführungsform der Erfindung sieht vor, dass jede Führungsbahn zwei sich parallel zueinander erstreckende Führungsstreben aufweist. Über die zwei zueinander beabstandet angeordneten Führungsstreben, die als Präzisionsführungsstreben ausgebildet sind, ist eine exakte Führung des Führungsschlittens des Stützelementes entlang der Führungsbahn der Stützeinrichtung und damit ein positionsgenaues Ausrichten des Füllrohres koaxial zu deren Mittelachsen gewährleistet. Der Einsatz von zwei Führungsstreben hat im Gegensatz zum Einsatz von nur einer Führungsstreben den darüber hinaus den Vorteil, dass der Führungsschlitten des Schützteiles bevorzugt verwindungssteif entlang der Führungsbahn der Stützeinrichtung geführt wird. Vorzugsweise weisen die Führungsstreben einen zylindrischen Querschnitt auf, wobei jedoch jeder andere Querschnitt, wie zum Beispiel oval oder auch rechteckig möglich ist. Die Führungsstreben erstrecken sich vorzugsweise nahezu über die gesamte Länge des jeweils zugeordneten Füllrohres, wodurch das Stützelement nahezu jeden Abschnitt eines jeweiligen Füllrohres abstützen kann.

Nach einer anderen Weiterbildung der Erfindung weist die Stützeinrichtung vorzugsweise eine koaxial zur Drehachse der Schwenkplatte angeordnete Zentralstrebe auf, an der die Führungsstreben einer jeweiligen Führungsbahn parallel verlaufend angeordnet sind. Mit dem Einsatz einer Zentralstrebe und den parallel dazu verlaufenden Führungsstreben ist eine feste, rahmenartige Struktur der Stützeinrichtung für die am Aufnahmeteil der Vorrichtung angeordneten Füllrohre geschaffen, welche gleichzeitig eine hohe strukturelle Festigkeit aufweist. Damit ist eine exakte Ausrichtung der Füllrohre zur Schwenkplatte sichergestellt. Die Führungsstreben einer jeweiligen Führungsbahn für jedes Stützelement sind parallel zur Zentralstrebe der Stützeinrichtung ausgerichtet, wodurch die beweglich aufgenommen Stützelemente präzise geführt und eine exakte Zentrierung der sonst nur an einem Ende dreh- und antreibbar aufgenommen Füllrohre gewährleistet ist.

Gemäß einer bevorzugten Ausgestaltung der Erfindung sind die Enden der Führungsstreben beidseitig über jeweils Verbindungsflansche mit der Zentralstrebe gekoppelt, worüber eine feste und damit sichere Verbindung mit der Zentralstrebe und eine positionsgenaue Ausrichtung der Führungsstreben für die Stützelemente zur Zentralstrebe gewährleistet ist. Mit dem Einsatz von Verbindungsflanschen ist des Weiteren eine konstruktiv einfache Möglichkeit für die Ausbildung einer festen, rahmenartigen Struktur der Stützeinrichtung gewährleistet, die damit mögliche auf diese einwirkende Querkräfte aufnehmen kann, ohne dass sich die Stützeinrichtung selbst nachteilig verbiegt oder verwindet.

Bevorzugt ist am freien Ende der Zentralstrebe ein abschnittsweise entlang der Zentralstrebe bewegliches Führungsteil der Darmbremseinheit angeordnet. Über das an der Zentralstrebe angreifende Führungsteil ist eine Kopplung zwischen der Stützeinrichtung und der Darmbremseinheit geschaffen, wodurch eine bevorzugt exakte Ausrichtung der Darmbremseinheit zur Stützeinrichtung der erfindungsgemäßen Füllvorrichtung bewirkt ist. Speziell das Aufschieben der Darmbremseinheit auf ein durch die Stützeinrichtung gestütztes Füllrohr kann daher vereinfacht und sicher erfolgen. Das Führungsteil der Darmbremseinheit ist vorzugsweise schiebebeweglich entlang des freien Endes der Zentralstrebe verschiebbar, wodurch der Abstand zwischen der Darmbremseinheit und dem Füllrohr verändert werden kann, sodass dann der Wechsel der Füllrohre durch bevorzugt das Schwenken des Aufnahmeteils an der erfindungsgemäßen Füllvorrichtung möglich ist. Vorzugsweise verbleibt das Führungsteil mit dem freien Ende der Zentralstrebe dauerhaft in Kontakt.

Jedes Stützelement weist vorzugsweise ein Lagerteil auf, über das ein Darmmitnahmering drehbeweglich aufgenommen ist, der jeweils drehfest am Füllrohr aufgenommen und schiebebeweglich entlang des Füllrohres ist. Mit der drehbeweglichen Aufnahme des Darmmitnahmeringes am Stützelement über bevorzugt ein Drehlager ist eine einfache Möglichkeit für eine Kopplung zwischen Stützelement und Füllrohr geschaffen, ohne ein separate strukturelle Verbindung mit dem Füllrohr herstellen zu müssen. Über den Darmmitnahmering, welcher Teil des Füllrohres ist, wird üblicherweise das Ende der auf das Füllrohr aufgeschobenen beziehungsweise aufgezogenen gerafften schlauchförmigen Hülle aufgenommen und gleichzeitig in Umfangsrichtung zum Fültrohres fixiert, dass zuerst oder voran beim Aufziehen der schlauchförmigen Hülle auf das Füllrohr aufgezogen wird. Darüber wird gewährleistet, dass nicht nur am offenen Ende des Füllrohres beziehungsweise im Bereich der Spitze eines Füllrohres die schlauchförmige Hülle auf die Außenseite des Füllrohres angedrückt wird, sondern auch das offene Ende der schlauchförmigen Hülle, auch als Darmraupe bezeichnet, form- oder reibschlüssig mit dem Füllrohr in Wirkverbindung gebracht wird. Demzufolge wird die schlauchförmige Hülle bevorzugt über ihre gesamte Länge gleichmäßig in eine Drehbewegung versetzt wird, wenn das Füllrohr zum Erzeugen der Abteil- beziehungsweise Abdrehstellen um ein vorbestimmtes Winkelmaß verdreht wird. Ein Verwinden der Enden der schlauchförmigen Hülle zueinander wird damit verhindert.

Bei einer bevorzugten Ausführungsform der erfindungsgemäßen Füllvorrichtung ist vorgesehen, dass das Stützelement dazu eingerichtet ist, während des Aufziehens der schlauchförmigen Hülle auf das Füllrohr, vorzugsweise mittels einer Darmgreifvorrichtung in Richtung des Aufnahmeteils bewegt zu werden. Durch das Verschieben des Stützelementes mit dem drehbar daran angeordneten Darmaufnahmering entlang des Füllrohres durch die Darmgreifvorrichtung kann das Stützelement bevorzugt ohne eigenen Antrieb entlang des Füllrohres in Richtung des Aufnahmeteils bewegt werden. Zudem werden quer zur Längsachse des Füllrohres wirkende Kräfte, währenddessen die schlauchförmige Hülle auf das Füllrohr aufgezogen wird, in dem Bereich durch das Stützelement aufgenommen, indem sie direkt durch die vorzugsweise koaxial über das Füllrohr verfahrbare Darmgreifvorrichtung am Füllrohr erzeugt werden. Damit ist sichergestellt, dass das Füllrohr beim Aufziehen der Darmraupe mittels der Darmgreifvorrichtung nicht übermäßig verbogen wird.

Gemäß einer anderen Weiterbildung der erfindungsgemäßen Füllvorrichtung ist vorgesehen, dass das Stützelement bevorzugt eingerichtet ist, während des Füllens der schlauchförmigen Hülle, mittels eines Darmschiebers in Richtung des offenen Endes des Füllrohres verschoben zu werden. Mit dem Darmschieber wird insbesondere während des Füllvorganges der schlauchförmigen Hülle mit der pastösen Masse, in Abhängigkeit von der aktuellen Länge der schlauchförmigen Hülle auf dem Füllrohr, der Abstand des Stützelements zum Aufnahmeteil vergrößert und damit der drehbar über die Drehaufnahme am Stützelement gelagerte Darmmitnahmering in seiner Position entlang des Füllrohres verändert beziehungsweise angepasst. Dadurch ist gewährleistet, dass die geraffte schlauchförmige Hülle, auch als Darmraupe bezeichnet, erst am offenen Ende speziell durch den an der Spitze des Füllrohres angeordneten Darmbremsring auf seine ursprüngliche Ausgangslänge gebracht wird. Das Bewegen des Stützelementes mit seinem Führungsschlitten entlang der Führungsbahn der Stützeinrichtung über den Darmschieber hat den Vorteil, dass das Stützelement keinen eigenen Antrieb benötigt, um entlang des Führungsrohres verschoben zu werden.

Ein weiterer Aspekt der Erfindung betrifft eine Stützeinrichtung für zumindest ein Füllrohr einer Vorrichtung zum Füllen von schlauchförmigen Hüllen mit pastöser Masse, insbesondere von Darmraupen mit Wurstbrät, welche sich erfindungsgemäß durch ein Stützelement für das Füllrohr auszeichnet, das in Längsrichtung des Füllrohrs im Abstand zu einem in das Füllrohr drehbeweglich aufnehmende Aufnahmeteil anordenbar und zur Aufnahme von auf das Füllrohr wirkenden Kräften eingerichtet ist, und wobei die Stützeinrichtung zum Einsatz an einer Vorrichtung zum Füllen von schlauchförmigen Hüllen nach einer der vorstehend beschriebenen bevorzugten Ausführungsformen eingerichtet ist. Mit einer derartig erfindungsgemäßen Stützvorrichtung mit ihren vorzugsweise zwei im Abstand zum Aufnahmeteil und damit im Abstand zu den dreh- und antreibbar gelagerten Enden der Füllrohren anordbaren Stützelementen, ist ein zweiter Lagerpunkt für das jeweils abzustützende Füllrohr umgesetzt. Bevorzugt können mittels des Stützelements auf das Füllrohr quer zu dessen Längsachse wirkende Kräfte sicher aufgenommen und des Weiteren lässt sich ein jeweils offenes Ende des Füllrohrs positionsgenau zu einer die geraffte Hülle auf das Füllrohr aufschiebenden Darmgreifvorrichtung bzw. zu einer mit der Hülle am offenen Ende des Füllrohrs in Wirkverbindung bringbaren Darmbremseinheit ausrichten. Bevorzugt ist das Stützelement entlang einer parallel zur Längsachse des Füllrohres verlaufenden Führungsbahn der Stützeinrichtung bewegbar, wobei die Stützeinrichtung bevorzugt starr an einem als Schwenkplatte ausgebildeten Aufnahmeteil einer Füllvorrichtung aufnehmbar ist.

Vorteilhafte Weiterbildungen der erfindungsgemäßen Stützeinrichtung ergeben sich aus den vorstehenden Erläuterungen zur erfindungsgemäßen Füllvorrichtung und deren bevorzugten Ausführungsformen. Insoweit wird auf die oben stehenden Erläuterungen verwiesen.

Die Erfindung bezieht sich zudem auf eine Füllmaschine zum Herstellen von Würstchen aus pastöser Masse, insbesondere aus Wurstbrät mit einem Fülltrichter zum Aufnehmen der pastösen Masse mit einer Förderpumpe zum Fördern der pastösen Masse und einer Vorrichtung zum Füllen von schlauchförmigen Hüllen mit einer pastösen Masse, insbesondere von Darmraupen mit Wurstbrät, nach einem der Ansprüche 1-13, und vorzugsweise mit mindestens einer Darmgreifvorrichtung für geraffte schlauchförmige Hüllen, wie Darmraupen oder dergleichen mit zwei relativ zueinander beweglich gehaltenden Greifelementen, die an mindestens einem Hebelelement drehbar gelagert sind.

An einer Füllmaschine mit einer derartig erfindungsgemäß ausgebildeten Füllvorrichtung ist durch die verringerte Biegebelastung an den Füllrohren eine verbesserte Prozesssicherheit während der Herstellung der Würstchen bewirkt. Das Risiko eines übermäßigen Verbiegens der Füllrohre quer zu deren Längsachse während des Aufziehens der schlauchförmigen Hüllen beziehungsweise während des in Kontakt bringen mit einer Darmbremseinheit am offenen Ende eines jeweiligen Füllrohres wird mit dem bevorzugt entlang des Füllrohres verschiebebeweglich ausgebildeten Stützelement vermieden. Vorteilhafte Ausführungsformen der Füllmaschine sind den vorstehenden Ausführungen zur erfindungsgemäßen Füllvorrichtung und deren bevorzugten Ausführungsformen zu entnehmen.

Nachfolgend wird die Erfindung anhand eines möglichen Ausführungsbeispiels unter Bezugnahme auf die beiliegenden Figuren näher beschrieben. Hierbei zeigen:
- Figur 1:: Eine Maschine zum Füllen von schlauchförmigen Hüllen mit einer erfindungsgemäßen Füllvorrichtung;
- Figur 2:: eine Draufsicht auf die Füllmaschine und die erfindungsgemäße Füllvorrichtung nach Figur 1;
- Figur 3:: eine perspektivische Ansicht einer erfindungsgemäßen Füllvorrichtung und einer damit gekoppelten Darmgreifvorrichtung für schlauchförmige Hüllen, und
- Figur 4:: eine perspektivische Teilansicht der die Füllrohre abstützenden Stützeinrichtung nach Figur 3.

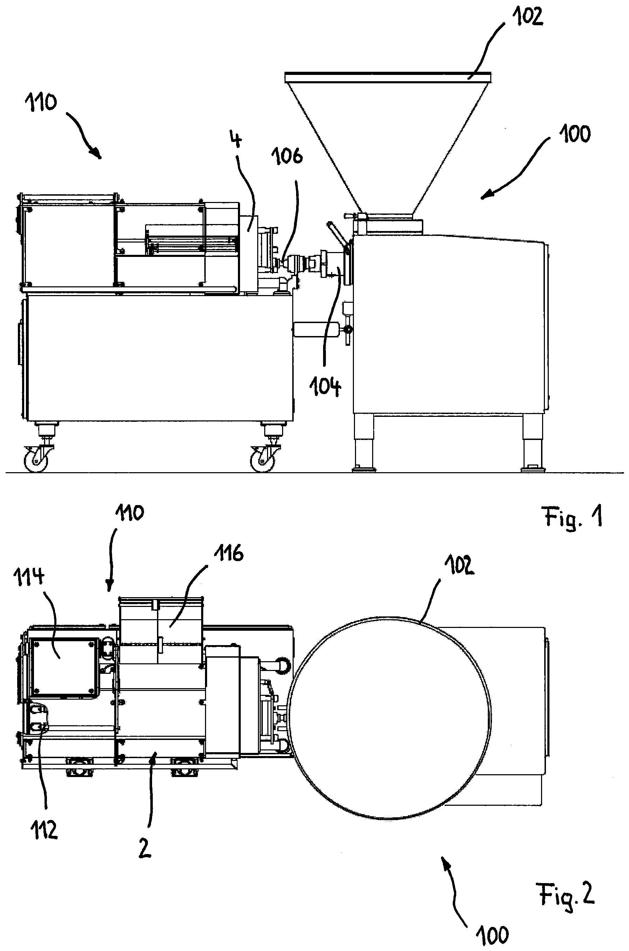

Die Figuren 1 und 2 zeigen eine Maschine 100 zum Füllen schlauchförmiger Hüllen, insbesondere von Wurstdärmen, in Verbindung mit einem Vorsatzgerät 110, an dem eine Füllvorrichtung 2 und eine Darmgreifvorrichtung 112 montiert ist. Die Maschine 100 weist einen Fülltrichter 102 und einen Extrusionskopf 104 auf, der über ein Ausgaberohr 106 mit einem Revolvermagazin 4 der Füllvorrichtung 2 medienleitend verbunden ist. Desweiteren ist auf dem Vorsatzgerät 110 eine Antriebseinheit 114 und ein Magazin 116 angeordnet, das mit einer Vielzahl von Darmraupen bevorratet ist. Die Füllvorrichtung 2, die Darmgreifvorrichtung 112, die Antriebseinheit 114 und das Magazin 116 sind über eine Rahmenstruktur grundsätzlich starr miteinander auf dem Vorsatzgerät verbunden, wobei die einzelnen Komponenten bevorzugt zueinander beweglich gehaltende Baugruppen bzw. Bauteile aufweisen.

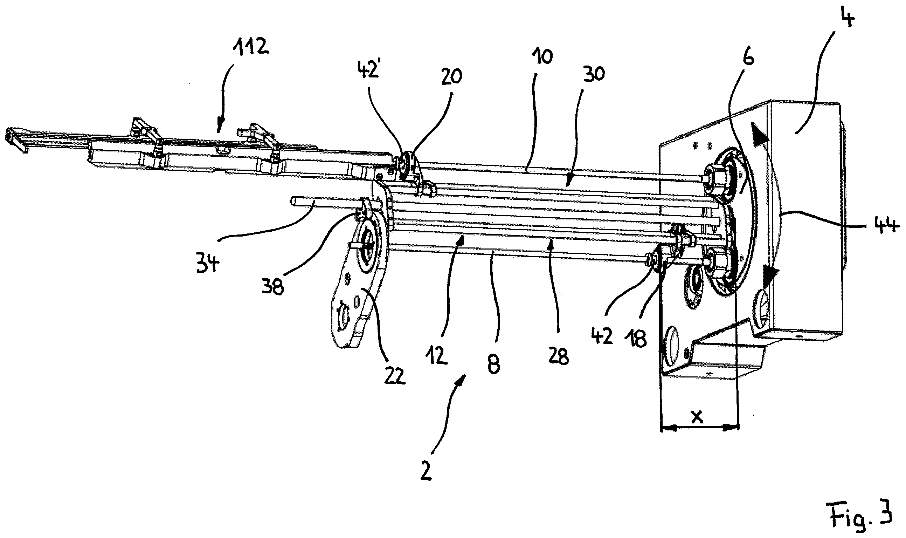

Die Figur 3 zeigt die Füllvorrichtung 2 zum Füllen von schlauchförmigen Hüllen mit einer pastösen Masse aus insbesondere Wurstbrät. Das Revolvermagazin 4 weist ein drehbar aufgenommenes Aufnahmeteil 6 für zwei dreh- und antreibbar am Aufnahmeteil 6 angeordnete Füllrohre 8, 10 auf, auf die jeweils eine mit der pastösen Masse befüllbare schlauchförmige Hülle aufziehbar ist. Das Aufnahmeteil 6 ist insbesondere als Schwenkplatte mit einer horizontal zum Untergrund ausgerichteten Drehachse ausgebildet. Am Aufnahmeteil 6 ist eine Stützeinrichtung 12 für die Füllrohre angeordnet, die für jedes Füllrohr 8, 10 ein im Abstand x zum Aufnahmeteil 6 und damit zum drehbeweglich gelagerten Ende 14, 16 des Füllrohres 8, 10 angeordnetes Stützelement 18, 20 aufweist. Mit Hilfe der Stützelemente 18, 20 werden auf die Füllrohre wirkende Querkräfte sicher aufgenommen und die Füllrohre zumindest entlang eines vorbestimmten Abschnittes positionsgenau zu ihrer Drehachse gehalten. Speziell beim Aufziehen der Darmraupen auf die Füllrohre und beim in Kontakt bringen eines jeweiligen offenen Endes 14', 16' eines jeweiligen Füllrohres 8, 10 mit einer Bremseinheit 22 ist sichergestellt, dass die Füllrohre durch die Stützeinrichtung nicht mehr übermäßig quer zu ihrer Längsachse verbogen werden. Die Drehachse des als Schwenkplatte ausgebildeten Aufnahmeteils 6 und die Drehachsen der Füllrohre 8, 10 verlaufen parallel zueinander und zudem sind die Drehachsen der Füllrohre 8, 10 gleichmäßig beabstanded zur Drehachse des Aufnahmeteiles 6 angeordnet. Dadurch kann ein relativ einfacher Wechsel der Füllrohre 8, 10 zwischen den verschieden Positionen an der Füllvorrichtung 2 erfolgen, um an dem einen Füllrohr 10 eine schlauchförmige Hülle aufzuziehen und an dem anderen Füllrohr 8 gleichzeitig den Füllvorgang der schlauchförmigen Hülle vorzunehmen.

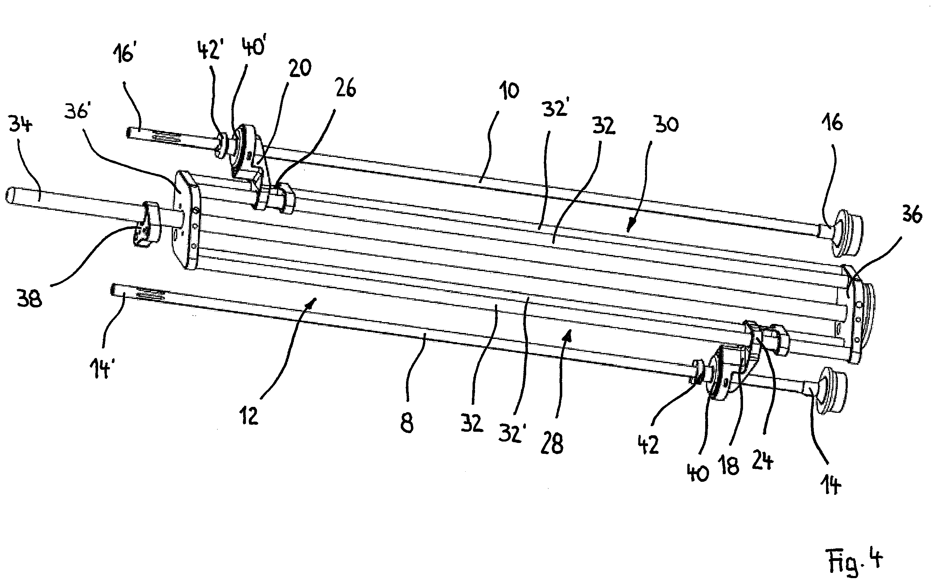

In Figur 4 ist eine Detailansicht der Stützeinrichtung 12 gezeigt, welche deren Aufbau und Funktion verdeutlichen soll. Jedes Stützelement 18, 20 weist ein Führungsschlitten 24, 26 auf, der jeweils entlang einer parallel zur Längsachse des Füllrohres 8, 10 verlaufenden Führungsbahn 28, 30 der Stützeinrichtung 12 schiebebeweglich ist, so dass der Abstand x der Stützelemente 18, 20 zum Aufnahmeteil 6 veränderlich ist. Dabei ist jede Führungsbahn 28, 30 aus zwei parallel zueinander verlaufenden Führungsstreben 32, 32' ausgebildet. Die Stützeinrichtung 12 weist zudem eine koaxial zur Drehachse des Aufnahmeteiles 6 angeordnete Zentralstrebe 34 auf, zu der die Führungsstreben 32, 32' einer jeweiligen Führungsbahn parallel verlaufend angeordnet sind. Die Führungsstreben 32, 32' sind endseitig über jeweils einen Verbindungsflansch 36, 36' mit der Zentralstrebe 34 gekoppelt, so dass die Stützeinrichtung 12 eine feste Rahmenstruktur ausbildet.

Wie aus Figur 3 ersichtlich, ist das freie Ende der Zentralstrebe 34 der Stützeinrichtung 12 mit einer Aufnahme eines Halteteiles 38 der Darmbremseinheit 22 gekoppelt, wodurch die Stützeinrichtung 12 bezogen auf ihre Ausrichtung quer zur Längsachse der Zentralstrebe 34 lagesicher zur Schwenkplatte 6 der Füllvorrichtung 2 aufgenommen ist. Die Zentralstrebe 34 ist jedoch in der Aufnahme des Halteteiles 38 in Längsrichtung verschiebbar. Jedes Stützelement 18, 20 weist ein als Drehaufnahme ausgebildetes Lagerteil 40, 40' für einen schiebbeweglich entlang des Füllrohres gehaltenen Darmmitnahmering 42, 42' auf, mittels dem sichergestellt wird, dass das auf das Füllrohr aufgeschobene Ende der schlauchförmigen Hülle beim Erzeugen der Abteilstellen zwischen den einzelnen Abschnitten der herzustellenden Strangabschnitte in Anlage mit dem Füllrohr gehalten wird. Eine feste Anlage der schlauchförmigen Hülle während des Befüllvorganges am offenen Ende 14' des Füllrohres 8 wird über einen nicht gezeigten Bremsring der Darmbremseinheit 22 bewirkt. Bevorzugt sind die Stützelemente 18, 20 eingerichtet, während des Aufziehens der schlauchförmigen Hülle auf das jeweilige Füllrohr 8, 10 mittels der Darmgreifvorrichtung 112 in Richtung des dreh- und antreibbar am Aufnahmeteil 6 befestigten Ende 14, 16 des Füllrohres 8, 10, wodurch der Abstand x zwischen Stützelement 18, 20 und Aufnahmeteil 6 vergrößert wird, und während des Befüllvorganges der schlauchförmigen Hülle, mittels eines nicht näher dargestellten Darmschiebers in Richtung des offenen Endes 14', 16' des Füllrohres 8, 10, wodurch der Abstand x zwischen Stützelement 18, 20 und Aufnahmeteil 6 verringert wird, verschoben zu werden.

Mit der erfindungsgemäßen Füllvorrichtung 2 erfolgt das Aufziehen einer schlauchförmigen Hülle auf das Füllrohr 10 und das Füllen einer auf einem Füllrohr 8 aufgenommenen schlauchförmigen Hülle wie nachfolgend erläutert. Wie die Figur 3 und 4 verdeutlichen, befindet sich das untere Füllrohr 8 in der Befüllposition für die auf das Füllrohr aufgezogene, jedoch nicht dargestellte schlauchförmige Hülle. Am offenen Ende 14' des Füllrohres 8 ist eine Darmbremseinheit 22 in Kontakt mit der auf dem Füllrohr aufgezogenen Hülle gebracht und gleichzeitig ist das offene Ende der schlauchförmigen Hülle mit dem Darmmitnahmering 42 in Anlage gebracht, sodass die auf dem Füllrohr 8 aufgezogene Hülle bei einer Rotation des Füllrohres 8 um seine Drehachse die erzeugte Drehbewegung gleichmäßig über seine gesamte Länge ausführt. Bei fortschreitender Befüllung der schlauchförmigen Hülle wird das Stützelement 18 über einen nicht dargestellten Darmschieber in Richtung des offenen Endes 14' des Füllrohres 8 bewegt, sodass sich die Länge des auf dem Füllrohr gerafften Hüllenabschnitts allmählich verringert. Mit dem Verschieben des Stützelementes in Richtung des offenen Endes verschiebt sich gleichzeitig der zweite, bewegliche Lagerpunkt in Längsrichtung des Füllrohrs zu dessen offenen Ende 14' hin, wodurch das Füllrohr 8 sicher gestützt wird. Während des Befüllvorganges der schlauchförmigen Hülle am Füllrohr 8 wird gleichzeitig am oberen Füllrohr 10 ein neuer geraffter Schlauchabschnitt mittels einer in Figur 3 gezeigten Darmgreifvorrichtung 112 über das offene Ende 16 des Füllrohres 10 in Richtung des dreh- und antreibbar aufgenommenen Endes 16 des Füllrohres 10 aufgezogen. Zu Beginn des bevorzugt gleichzeitig ablaufenden Aufziehvorganges befindet sich das Stützelement 20 in seiner vorderen Endlage im Nahbereich des offenen Endes 16' des Füllrohres 10, wodurch sichergestellt ist, dass das Füllrohr 10 positionsgenau zur Darmgreifvorrichtung 112 und der darüber zuziehenden schlauchförmigen Hülle ausgerichtet ist. Das Stützelement 20 wird dann, da es keinen eigenen Antrieb besitzt, durch die Darmgreifvorrichtung 112 entlang der Führungsstreben 32, 32' in Richtung des als Schwenkplatte ausgebildeten Aufnahmeteils 6 verschoben. Nach dem Aufziehen der schlauchförmigen Hülle durch die Darmgreifvorrichtung geht diese in ihre Ausgangsposition zurück.

Nach Beendigung des Füllvorganges am Füllrohr 8 wird die Darmbremseinheit 22 vom offenen Ende 14' des Füllrohres 8 in Längsrichtung des Füllrohres heruntergezogen, und dann dass als Schwenkplatte ausgebildete Aufnahmeteil 6 um etwa 180° (Pfeil 44) verschwenkt, sodass nun mehr das zuvor obere und nun mehr mit der schlauchförmigen Hülle bestückte Füllrohr 10 in die untere Position verfahren wird und das leere Füllrohr 8 sich dann in der oberen Position befindet. Durch die an den Füllrohren 8, 10 angreifenden Stützelemente 18, 20 kann die Schwenkbewegung der Schwenkplatte 6 mit den Füllrohren um ihre Drehachse mit hoher Geschwindigkeit vorgenommen werden, da einem Schwingen der Füllrohre durch die Stützelemente entgegengewirkt wird. Nach erfolgtem Positionswechsel der Füllrohre kann nunmehr mit dem Füllvorgang am Füllrohr 10 und dem wiederholten Aufziehen der schlauchförmigen Hülle auf das Füllrohr 8 begonnen werden.

## Patentansprüche

1. Vorrichtung zum Füllen von schlauchförmigen Hüllen, mit einer pastösen Masse, insbesondere von Darmraupen mit Wurstbrät, mit
- zumindest einem um seine Längsachse dreh- und antreibbaren Füllrohr (8, 10), auf das eine mit einer Masse befüllbare Hülle aufziehbar ist,
- wobei ein Ende des Füllrohrs (8, 10) an einem Aufnahmeteil (6) drehbeweglich gelagert und dem gegenüberliegenden, offenen Ende eine mit einer über das Füllrohr gezogenen Hülle in Wirkverbindung bringbare Darmbremseinheit (22) zugeordnet ist, **gekennzeichnet durch**,
eine am Aufnahmeteil (6) angeordnete Stützeinrichtung (12), welche ein in Längsrichtung des Füllrohres (8, 10) im Abstand (x) zum Aufnahmeteil (6) angeordnetes Stützelement (18, 20) für das Füllrohr (8, 10) aufweist, wobei das Stützelement (18, 20) zur Aufnahme von auf das Füllrohr (8, 10) wirkenden Querkräften eingerichtet und entlang des Füllrohres (8, 10) beweglich ist.

2. Vorrichtung nach Anspruch 1,
**dadurch gekennzeichnet, dass** am Aufnahmeteil (6) mehrere dreh- und antreibbare Füllrohre (8, 10) angeordnet sind, wobei jedes Füllrohr (8, 10) über ein in Längsrichtung im Abstand (x) zum Aufnahmeteil (6) angeordnetes Stützelement (18, 20) gelagert ist.

3. Vorrichtung nach einem der Ansprüche 1 und 2,
**dadurch gekennzeichnet, dass** das Aufnahmeteil (6) eine Schwenkplatte aufweist, die beweglich an der Vorrichtung (2) gehalten und an der jeweils das Füllrohr (8, 10) vorzugsweise waagerecht abstehend angeordnet ist.

4. Vorrichtung nach Anspruch 3,
**dadurch gekennzeichnet, dass** die Schwenkplatte eine Drehachse aufweist, wobei die Drehachse der Schwenkplatte und jeweils die Drehachse des Füllrohres (8, 10) parallel zueinander ausgerichtet sind.

5. Vorrichtung nach einem der Ansprüche 1 bis 4,
**dadurch gekennzeichnet, dass** das Stützelement (18, 20) jeweils einen Führungsschlitten (24, 26) aufweist, welcher entlang einer parallel zur Längsachse des Füllrohres (8, 10) verlaufenden Führungsbahn (28, 30) der Stützeinrichtung (12) beweglich ist.

6. Vorrichtung nach Anspruch 5,
**dadurch gekennzeichnet, dass** jede Führungsbahn (28, 30) zwei sich parallel zueinander erstreckende Führungsstreben (32, 32') aufweist.

7. Vorrichtung nach einem der Ansprüche 3 bis 6,
**dadurch gekennzeichnet, dass** die Stützeinrichtung (12) eine koaxial zur Drehachse der Schwenkplatte (6) angeordnete Zentralstrebe (34) aufweist, zu der die Führungsstreben (32, 32') einer jeweiligen Führungsbahn (28, 30) parallel angeordnet sind.

8. Vorrichtung nach Anspruch 7,
**dadurch gekennzeichnet, dass** die Enden der Führungsstreben (32, 32') beidseitig über jeweils einen Verbindungsflansch (36, 36') mit der Zentralstrebe (34) verbunden sind.

9. Vorrichtung nach einem der Ansprüche 7 und 8,
**dadurch gekennzeichnet, dass** am freien Ende der Zentralstrebe (34) ein abschnittsweise entlang der Zentralstrebe bewegliches Führungsteil der Darmbremseinheit (22) angeordnet ist.

10. Vorrichtung nach einem der Ansprüche 1 bis 9,
**dadurch gekennzeichnet, dass** jedes Stützelements (18, 20) ein Lagerteil (40, 40') aufweist, über das ein Darmmitnahmering (42, 42') drehbeweglich aufgenommen ist, der jeweils drehfest am Füllrohr (8, 10) aufgenommen und schiebbeweglich entlang des Füllrohres (8, 10) ist.

11. Vorrichtung nach einem der Ansprüche 1 bis 10,
**dadurch gekennzeichnet, dass** das Stützelement (18, 20) dazu eingerichtet ist, während des Aufziehens der schlauchförmigen Hülle auf das Füllrohr (8, 10), vorzugsweise mittels einer Darmgreifvorrichtung (112) in Richtung des Aufnahmeteils (6) bewegt zu werden.

12. Vorrichtung nach einem der Ansprüche 1 bis 11,
**dadurch gekennzeichnet, dass** das Stützelement (18, 20) eingerichtet ist, während des Füllens der schlauchförmigen Hülle, vorzugsweise mittels eines Darmschiebers, in Richtung des offenen Endes (14', 16') des Füllrohres (8, 10) verschoben zu werden.

13. Stützeinrichtung für zumindest ein Füllrohr (8, 10) einer Vorrichtung zum Füllen von schlauchförmigen Hüllen mit pastöser Masse, insbesondere von Darmraupen mit Wurstbrät, mit
einem Stützelement (18, 20) für das Füllrohr (8, 10), das in Längsrichtung des Füllrohres (8, 10) im Abstand (x) zu einem das Füllrohr drehbeweglich aufnehmenden Aufnahmeteil (6) anordenbar und zur Aufnahme von auf das Füllrohr (8, 10) wirkenden Querkräften eingerichtet ist, und wobei
die Stützeinrichtung zum Einsatz an einer Vorrichtung zum Füllen von schlauchförmigen Hüllen, nach einem der Ansprüche 1 bis 12, eingerichtet ist,
**dadurch gekennzeichnet, dass** das Stützelement (18, 20) entlang eines Füllrohres (8, 10) beweglich ist.

14. Füllmaschine (100) zum Herstellen von Würstchen aus pastöser Masse, insbesondere aus Wurstbrät,
- mit einem Fülltrichter (102) zum Aufnehmen der pastösen Masse,
- einer Förderpumpe zum Fördern der pastösen Masse, und
- mit einer Vorrichtung (2) zum Füllen von schlauchförmigen Hüllen mit einer pastösen Masse, insbesondere von Darmraupen mit Wurstbrät, nach einem der Ansprüche 1 bis 12,
- und vorzugsweise mit mindestens einer Darmgreifvorrichtung (112) für geraffte Darmraupen mit zwei relativ zueinander beweglich gehaltenen Greifelementen, die an mindestens einem Hebelelement drehbar gelagert sind.

## Claims

1. Apparatus for filling tubular casings with a pasty material, in particular gathered-together sausage cases with sausagemeat, comprising
- at least one filling tube (8, 10) which is drivable and rotatable about its longitudinal axis and on to which a casing which can be filled with a material can be drawn,
- wherein an end of the filling tube (8, 10) is rotatably moveably mounted to a receiving portion (6) and associated with the opposite open end is a sausage case braking unit (22) which can be brought into operative relationship with a casing which has been drawn over the filling tube,
**characterised by**
a support device (12) which is arranged on the receiving portion (6) and which has a support element (18, 20) for the filling tube (8, 10), that is arranged at a spacing (x) relative to the receiving portion (6) in the longitudinal direction of the filling tube (8, 10), wherein the support element (18, 20) is adapted to carry transverse forces acting on the filling tube (8, 10) and is moveable along the filling tube (8, 10).

2. Apparatus according to claim 1 **characterised in that** a plurality of rotatable and drivable filling tubes (8, 10) are arranged on the receiving portion (6), wherein each filling tube (8, 10) is mounted by way of a support element (18, 20) arranged at a spacing (x) relative to the receiving portion (6) in the longitudinal direction.

3. Apparatus according to one of claims 1 and 2 **characterised in that** the receiving portion (6) has a pivot plate which is held moveably to the apparatus (2) and at which the filling tube (8, 10) is respectively arranged preferably in horizontally projecting relationship.

4. Apparatus according to claim 3 **characterised in that** the pivot plate has an axis of rotation, wherein the axis of rotation of the pivot plate and the respective axis of rotation of the filling tube (8, 10) are oriented in mutually parallel relationship.

5. Apparatus according to one of claims 1 to 4 **characterised in that** the support element (18, 20) has a respective guide slide (24, 26) moveable along a guide path (28, 30) of the support device (12), which guide path extends parallel to the longitudinal axis of the filling tube (8, 10).

6. Apparatus according to claim 5 **characterised in that** each guide path (28, 30) has two guide bars (32, 32') extending in mutually parallel relationship.

7. Apparatus according to one of claims 3 to 6 **characterised in that** the support device (12) has a central bar (34) which is arranged coaxially with the axis of rotation of the pivot plate (6) and in relation to which the guide bars (32, 32') of a respective guide path (28, 30) are arranged parallel.

8. Apparatus according to claim 7 **characterised in that** the ends of the guide bars (32, 32') are connected at both sides to the central bar (34) by way of a respective connecting flange (36, 36').

9. Apparatus according to one of claims 7 and 8 **characterised in that** arranged at the free end of the central bar (34) is a guide portion, which is moveable portionwise along the central bar, of the sausage case braking unit (22).

10. Apparatus according to one of claims 1 to 9 **characterised in that** each support element (18, 20) has a bearing portion (40, 40'), by way of which a sausage case entrainment ring (42, 42') is rotatably moveably mounted, which ring is respectively mounted non-rotatably on the filling tube (8, 10) and slidingly moveably along the filling tube (8, 10).

11. Apparatus according to one of claims 1 to 10 **characterised in that** the support element (18, 20) is adapted to be moved in the direction of the receiving portion (6) while the tubular casing is being drawn on to the filling tube (8, 10), preferably by means of a sausage case gripping device (112).

12. Apparatus according to one of claims 1 to 11 **characterised in that** the support element (18, 20) is adapted to be displaced in the direction of the open end (14', 16') of the filling tube (8, 10) during filling of the tubular casing, preferably by means of a sausage case slider.

13. A support device for at least one filling tube (8, 10) of an apparatus for filling tubular casings with pasty material, in particular gathered sausage cases, with sausagemeat, comprising
a support element (18, 20) for the filling tube (8, 10), which can be arranged at a spacing (x) relative to a receiving portion (6) which rotatably moveably receives the filling tube, in the longitudinal direction of the filling tube (8, 10), and is adapted to carry transverse forces acting on the filling tube (8, 10), and wherein
the support device is adapted for use on an apparatus for filling tubular casings according to one of claims 1 through 12,
**characterised in that** the support element (18, 20) is moveable along a filling tube (8, 10)

14. A filling machine (100) for producing sausages from pasty material, in particular sausagemeat, comprising
- a filling hopper (102) for receiving the pasty material,
- a conveyor pump for conveying the pasty material, and
- an apparatus (2) for filling tubular casings with a pasty material, in particular gathered sausage cases with sausagemeat, according to one of claims 1 to 12,
- and preferably at least one sausage case gripping device (112) for gathered sausage cases comprising two gripping elements which are held moveably relative to each other and which are mounted rotatably on at least one lever element.

## Revendications

1. Dispositif de remplissage d'enveloppes en forme de tuyau, avec une masse pâteuse, en particulier des boyaux froncés avec de la chair à saucisse, avec
- au moins un tube de remplissage (8, 10) entraînable et rotatif autour de son axe longitudinal, sur lequel une enveloppe remplissable avec une masse peut être enfilée,
- dans lequel une extrémité du tube de remplissage (8, 10) est logée de manière mobile en rotation sur une partie de réception (6) et une unité de freinage de boyau (22) pouvant être amenée en liaison active avec une enveloppe tirée au-dessus du tube de remplissage est associée à l'extrémité ouverte opposée,
**caractérisé par**
un dispositif d'appui (12), situé sur la partie de réception (6), qui présente un élément d'appui (18, 20) pour le tube de remplissage (8, 10) disposé dans le sens longitudinal du tube de remplissage (8, 10) à distance (x) de la partie de réception (6), dans lequel l'élément d'appui (18, 20) est aménagé pour la réception de forces transversales agissant sur le tube de remplissage (8, 10) et est mobile le long du tube de remplissage (8, 10).

2. Dispositif selon la revendication 1,
**caractérisé en ce que** plusieurs tubes de remplissage (8, 10) entraînables et rotatifs sont disposés sur la partie de réception (6), dans lequel chaque tube de remplissage (8, 10) est logé par le biais d'un élément d'appui (18, 20) disposé dans le sens longitudinal à distance (x) de la partie de réception (6).

3. Dispositif selon l'une des revendications 1 et 2,
**caractérisé en ce que** la partie de réception (6) présente une plaque de pivotement qui est maintenue de manière mobile sur le dispositif (2) et sur laquelle respectivement le tube de remplissage (8, 10) est disposé de manière à dépasser de préférence horizontalement.

4. Dispositif selon la revendication 3,
**caractérisé en ce que** la plaque de pivotement présente un axe de rotation, dans lequel l'axe de rotation de la plaque de pivotement et respectivement l'axe de rotation du tube de remplissage (8, 10) sont orientés parallèlement l'un à l'autre.

5. Dispositif selon l'une des revendications 1 à 4,
**caractérisé en ce que** l'élément d'appui (18, 20) présente respectivement un chariot de guidage (24, 26) qui est mobile le long d'une bande de guidage (28, 30), s'étendant parallèlement à l'axe longitudinal du tube de remplissage (8, 10), du dispositif d'appui (12).

6. Dispositif selon la revendication 5,
**caractérisé en ce que** chaque bande de guidage (28, 30) présente deux entretoises de guidage (32, 32') s'étendant parallèlement l'une à l'autre.

7. Dispositif selon l'une des revendications 3 à 6,
**caractérisé en ce que** le dispositif d'appui (12) présente une entretoise centrale (34) disposée coaxialement à l'axe de rotation de la plaque de pivotement (6), parallèlement à laquelle les entretoises de guidage (32, 32') d'une bande de guidage (28, 30) respective sont disposées.

8. Dispositif selon la revendication 7,
**caractérisé en ce que** les extrémités des entretoises de guidage (32, 32') sont reliées de part et d'autre par respectivement une bride de liaison (36, 36') à l'entretoise centrale (34).

9. Dispositif selon l'une des revendications 7 et 8,
**caractérisé en ce qu'**une partie de guidage mobile par section le long de l'entretoise centrale de l'unité de freinage de boyau (22) est située sur l'extrémité libre de l'entretoise centrale (34).

10. Dispositif selon l'une des revendications 1 à 9,
**caractérisé en ce que** chaque élément d'appui (18, 20) présente une partie de palier (40, 40'), par laquelle un anneau d'entraînement de boyau (42, 42') est reçu de manière mobile en rotation, lequel est reçu respectivement sans pouvoir tourner sur le tube de remplissage (8, 10) et est mobile en coulissement le long du tube de remplissage (8, 10) .

11. Dispositif selon l'une des revendications 1 à 10,
**caractérisé en ce que** l'élément d'appui (18, 20) est aménagé afin d'être déplacé pendant l'enfilage de l'enveloppe en forme de tuyau sur le tube de remplissage (8, 10), de préférence à l'aide d'un dispositif de saisie de boyau (112) en direction de la partie de réception (6).

12. Dispositif selon l'une des revendications 1 à 11,
**caractérisé en ce que** l'élément d'appui (18, 20) est aménagé afin d'être déplacé pendant le remplissage de l'enveloppe en forme de tuyau, de préférence à l'aide d'un coulisseau de boyau en direction de l'extrémité ouverte (14', 16') du tube de remplissage (8, 10).

13. Dispositif d'appui pour au moins un tube de remplissage (8, 10) d'un dispositif de remplissage d'enveloppes en forme de tuyau avec une masse pâteuse, en particulier de boyaux froncés avec de la chair à saucisse avec
un élément d'appui (18, 20) pour le tube de remplissage (8, 10) qui peut être disposé dans le sens longitudinal du tube de remplissage (8, 10) à distance (x) d'une partie de réception (6) recevant de manière mobile en rotation le tube de remplissage et est aménagé pour la réception de forces transversales agissant sur le tube de remplissage (8, 10) et dans lequel
le dispositif d'appui est aménagé pour l'insertion sur un dispositif de remplissage d'enveloppes en forme de tuyau selon l'une des revendications 1 à 12,
**caractérisé en ce que** l'élément d'appui (18, 20) est mobile le long d'un tube de remplissage (8, 10).

14. Machine de remplissage (100) pour la fabrication de petites saucisses à partir de masse pâteuse, en particulier à partir de chair à saucisse,
- avec un entonnoir de remplissage (102) pour la réception de la masse pâteuse,
- une pompe de refoulement pour le refoulement de la masse pâteuse et
- avec un dispositif (2) pour le remplissage d'enveloppes en forme de tuyau avec une masse pâteuse, en particulier de boyaux froncés avec de la chair à saucisse selon l'une des revendications 1 à 12,
- et de préférence avec au moins un dispositif de saisie de boyau (112) pour des boyaux froncés avec deux éléments de préhension maintenus de manière mobile l'un par rapport à l'autre qui sont logés de manière rotative sur au moins un élément de levier.
